# EUROPEAN PATENT APPLICATION

(11) **EP 2 975 837 A1**
(43) Date of publication of application: **20.01.2016**
(21) Application number: 15162613.2
(22) Date of filing: 07.04.2015
(51) Int. Cl.: H04N 5/232, H04N 5/14

(54) **Camera shooting method and device**

(30) Priority: 18.07.2014 CN 201410345814
(71) Applicant: Xiaomi Inc., Beijing 100085 (CN)
(72) Inventor: Tang, Mingyong, Beijing (CN); Liu, Huayijun, Beijing (CN); Xiao, Yanlin, Beijing (CN)
(74) Representative: Hanna, Peter William Derek

(57) **Abstract**

The present disclosure relates to a method of operating a digital camera and a device so as to help users automatically shoot suitable sequences of pictures according to variation status of objects photographed. The method comprises: monitoring (S101) whether a current moment reaches a preset shooting moment; shooting a picture and acquiring (S102) a first picture when a current moment reaches a preset shooting moment; determining (S103) a distinction between a preset area image in the first picture and a preset area image in a second picture shot at a previous preset shooting moment; and saving (S104) the first picture when the distinction is equal to or greater than a first preset threshold value. The technical solution according to embodiments of the present disclosure automatically shoots pictures for users, selects and saves satisfactory pictures, and has the advantages of effectively avoiding missing shooting or repeatedly saving identical pictures or pictures with inconspicuous change for the convenience of making a dynamic image or synthesizing a video at a later stage, thus meeting user demands and saving plenty of time and effort.

## Description

### TECHNICAL FIELD

The present disclosure generally relates to the field of digital photographic technology, and more particularly, to a camera shooting method and a device.

### BACKGROUND

A majority of amateur photographers are good at shooting photographs of figures and landscape, etc. However, when trying to capture special images, desired pictures may be difficult to obtain due to equipment constraints or available shooting modes. For example, in the whole time lapse shooting process of flowers blooming and fading, pictures need to be taken one at a time at set intervals, and the period during which the flower is fully open (anthesis), florescence and fading, may be varied in their respective variation status, which may lead to missing the desired picture sequence due to too long a time lapse interval, or some pictures appear without change or with inconspicuous change due to too short a time lapse interval, thus making it impossible to completely display the whole process of flowers blooming and fading.

The technical solution according to embodiments of the present disclosure automatically shoots pictures for users, selects and saves satisfactory pictures, and has the advantages of effectively avoiding "missing" shots in a sequence or repeatedly saving identical pictures or pictures with inconspicuous change for the convenience of making a dynamic sequence of images or synthesizing a video, movie or time lapse sequence, at a later stage, thus meeting user demands and saving plenty of time and effort.

### SUMMARY

In order to overcome problems in related prior art technologies, the present invention provides a method of operating a digital camera and a device in accordance with claims which follow, so as to help users automatically shoot suitable pictures according to a variation status of objects photographed, and to automatically record the whole shooting process, thus saving plenty of time and effort.

According to the first aspect of the embodiments of the present disclosure, there is provided a method of operating a digital camera, comprising:
monitoring whether a current moment reaches a preset shooting moment;
shooting a picture and acquiring a first picture when the current moment reaches the preset shooting moment;
determining a distinction between a preset area image in the first picture and a preset area image in a second picture shot at a previous preset shooting moment; and
saving the first picture when the distinction is equal to or greater than a first preset threshold value.

In an exemplary embodiment, the method also comprises:
discarding the first picture when the distinction is smaller than the first preset threshold value.

In an exemplary embodiment, prior to monitoring whether a current moment reaches a preset shooting moment, the method also comprises:
setting the preset shooting moment.

In an exemplary embodiment, the setting the preset shooting moment may comprise:
receiving a shooting moment inputted, and determining the shooting moment inputted as the preset shooting moment; or
identifying an object photographed and acquiring an identification result, the identification result comprising category information relating to the object photographed and/or variable parameters relating to the object photographed; and determining the preset shooting moment according to the identification result; or
receiving a shooting time interval inputted, and determining the preset shooting moment according to the shooting time interval; or
acquiring at least two pictures continuously shot prior to the current moment according to a first shooting time interval, judging whether preset area images in the at least two pictures are the same; setting a second shooting time interval greater than the first shooting time interval if they are the same, and determining the preset shooting moment according to the second shooting time interval; setting a third shooting time interval smaller than the first shooting time interval if they are different and distinctions between preset area images in every two adjacent pictures in the at least two pictures are equal to or greater than a second preset threshold value, and determining the preset shooting moment according to the third shooting time interval.

In an exemplary embodiment, when the preset area image is a plant image in a preset area, the distinction comprises:
a difference value between a picture ratio of the plant image in the first picture and a picture ratio of the plant image in the second picture; and/or
a difference value between a shape variation of the plant image in the first picture and a shape variation of the plant image in the second picture.

In an exemplary embodiment, after saving the first picture, the method also comprises:
acquiring the first picture and at least one picture continuously shot prior to the current moment; determining a volume variation of a preset area image in every two adjacent images in the first picture and the at least one picture; and stopping shooting when the volume variation of a preset area image in every two adjacent images is zero; or
stopping shooting according to a stop instruction inputted.

In an exemplary embodiment, the method may also comprise:
integrating, in accordance with a shooting sequence, all the first pictures saved and forming a dynamic image.

In an exemplary embodiment, prior to shooting a picture and acquiring a first picture when a current moment reaches a preset shooting moment, the method may also comprise:
acquiring environmental parameters; and
adjusting shooting parameters according to the environmental parameters.

The shooting a picture and acquiring a first picture when a current moment reaches a preset shooting moment comprises:
shooting a picture and acquiring a first picture according to the shooting parameters adjusted when a current moment reaches a preset shooting moment.

According to the second aspect of the embodiments of the present disclosure, there is provided a camera shooting device, comprising:
a monitoring module, configured to monitor whether a current moment reaches a preset shooting moment;
a shooting module, configured to shoot a picture and acquire a first picture when a current moment reaches a preset shooting moment;
a determination module, configured to determine a distinction between a preset area image in the first picture and a preset area image in a second picture shot at a previous preset shooting moment; and
a saving module, configured to save the first picture when the distinction is equal to or greater than a first preset threshold value.

In an exemplary embodiment, the device also comprises:
a discarding module, configured to discard the first picture when the distinction is smaller than the first preset threshold value.

In an exemplary embodiment, the device also comprises:
a setting module, configured to set the preset shooting moment.

In an exemplary embodiment, the setting module may comprise:
a first setting submodule, configured to receive a shooting moment inputted, and determine the shooting moment inputted as the preset shooting moment; or
a second setting submodule, configured to: identify an object photographed and acquire an identification result, the identification result comprising category information relating to the object photographed and/or variable parameters relating to the object photographed; and determine the preset shooting moment according to the identification result; or
a third setting submodule, configured to receive a shooting time interval inputted, and determine the preset shooting moment according to the shooting time interval; or
a fourth setting submodule, configured to: acquire at least two pictures continuously shot prior to the current moment according to a first shooting time interval, judge whether preset area images in the at least two pictures are the same; set a second shooting time interval greater than the first shooting time interval if they are the same, and determine the preset shooting moment according to the second shooting time interval; set a third shooting time interval smaller than the first shooting time interval if they are different and distinctions between preset area images in every two adjacent pictures in the at least two pictures are equal to or greater than a second preset threshold value, and determine the preset shooting moment according to the third shooting time interval.

In an exemplary embodiment, the determination module may comprise:
a determination submodule, configured, when the preset area image is a plant image, to determine a distinction between a preset area image in the first picture and a preset area image in a second picture shot at a previous preset shooting moment; the distinction comprising: a difference value between a picture ratio of the plant image in the first picture and a picture ratio of the plant image in the second picture; and/or a difference value between a shape variation of the plant image in the first picture and a shape variation of the plant image in the second picture.

In an exemplary embodiment, the device also comprises:
a first stopping module, configured, after the first picture is saved by the saving module, to acquire the first picture and at least one picture continuously shot prior to the current moment; to determine a volume variation of a preset area image in every two adjacent images in the first picture and the at least one picture; and to stop shooting when the volume variation of a preset area image in every two adjacent images is zero; or
a second stopping module, configured to stop shooting according to a stop instruction inputted.

In an exemplary embodiment, the device also comprises:
an integration module, configured to integrate, in accordance with the shooting sequence, all the first pictures saved and form a dynamic image.

In an exemplary embodiment, the device also comprises:
an acquisition module, configured to acquire environmental parameters before the first picture is acquired by the shooting module; and
an adjustment module, configured to adjust shooting parameters according to the environmental parameters.

The shooting module comprises:
a shooting submodule, configured to shoot a picture and acquire a first picture according to the shooting parameters adjusted when a current moment reaches a preset shooting moment.

According to the third aspect of the embodiments of the present disclosure, a camera shooting device is provided, comprising:
a processor;
a memory configured to store instructions executable by the processor;
wherein, the processor is configured to:
monitor whether a current moment reaches a preset shooting moment;
shoot a picture and acquire a first picture when a current moment reaches a preset shooting moment;
determine a distinction between a preset area image in the first picture and a preset area image in a second picture shot at a previous preset shooting moment; and
save the first picture when the distinction is equal to or greater than a first preset threshold value.

The technical solution according to embodiments of the present disclosure may have the following beneficial effects: automatically shooting pictures for users, selecting and saving satisfactory pictures; effectively avoiding missing shooting or repeatedly saving identical pictures or pictures with inconspicuous change, automatically shooting suitable pictures for users for the convenience of making a dynamic image or synthesizing a video at a later stage, thus meeting user demands and saving plenty of time and effort.

It is to be understood that both the foregoing general description and the following detailed description are exemplary and explanatory only and are not restrictive of the disclosure.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1A is a flow chart showing a camera shooting method according to an exemplary embodiment.
Fig. 1B is an effect drawing of a second picture according to a camera shooting method in an exemplary embodiment.
Fig. 1C is an effect drawing of a first picture according to a camera shooting method in an exemplary embodiment.
Fig. 2 is a flow chart showing a camera shooting method according to an exemplary embodiment 1.
Fig. 3 is a flow chart showing a camera shooting method according to an exemplary embodiment 2.
Fig. 4 is a block diagram of a camera shooting device according to an exemplary embodiment.
Fig. 5 is a block diagram of another camera shooting device according to an exemplary embodiment.
Fig. 6 is a block diagram fit for a camera shooting device according to an exemplary embodiment (general structure of terminal equipment).

### DESCRIPTION OF THE EMBODIMENTS

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

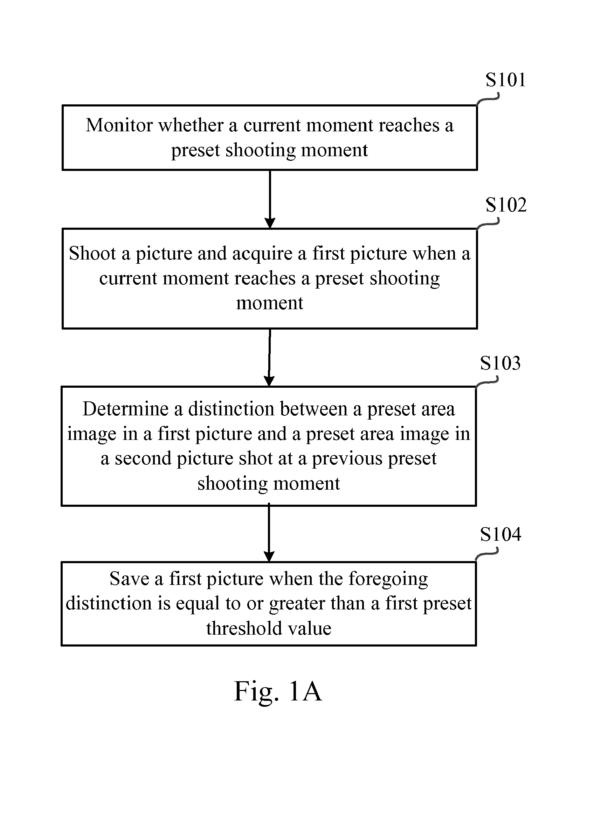

Fig. 1A is a flow chart showing a camera shooting method according to an exemplary embodiment, the camera shooting method is applied to a terminal having a shooting function, for example, a camera, a mobile phone or a tablet computer and the like, as shown in Fig.1A, the camera shooting method comprises following steps:
In Step S101, a current moment is monitored whether to reach a preset shooting moment.

Wherein, a preset shooting moment may be set either by users according to their needs or by a system.
In Step S102, a picture is shot and a first picture is acquired when a current moment reaches a preset shooting moment.
In Step S103, a distinction between a preset area image in a first picture and a preset area image in a second picture shot at a previous preset shooting moment is determined.

Wherein, the preset area image may be an image preset at a shooting area, for example, the preset area image is a flower in the process of shooting a blooming plant. A shooting area may be either preset by users or automatically defined by a system after the system judges which area has images that need shooting based on a preanalysis.

In an exemplary embodiment, when the preset area image is a plant image in a preset area, a distinction includes at least one of following two difference values: a difference value between a picture ratio of the plant image in a first picture and a picture ratio of the plant image in a second picture; and/or a difference value between a shape variation of the plant image in the first picture and a shape variation of the plant image in the second picture. Namely, variation of the plant image is determined by comparing variation quantity of the picture ratio and the shape of the plant image in the whole shot picture area between the first picture and the second picture.
In Step S104, the first picture is saved when the foregoing distinction is equal to or greater than a first preset threshold value.

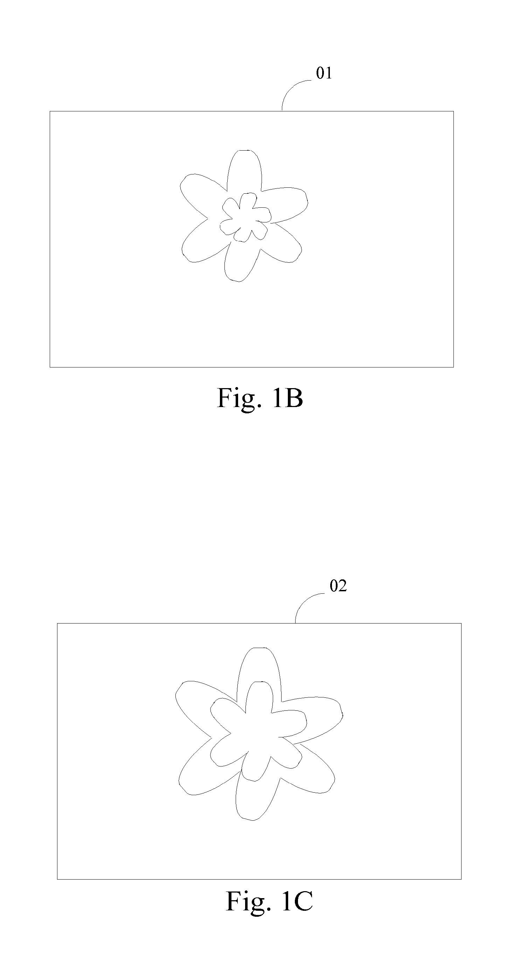

In an exemplary embodiment, pictures shot at a current preset shooting moment are saved when a distinction between pictures shot at the current preset shooting moment and pictures shot at a previous preset shooting moment is equal to or greater than a first preset threshold value (for example, 10%). The first preset threshold value may be as below: for example, if an object photographed is a flower, compared with the flower in pictures shot at a previous preset shooting moment, the flower in pictures shot at a current preset shooting moment is increased in volume by the first preset threshold value 10% or more, under the circumstances, it is regarded that status of the flower is changed obviously, and pictures shot at the current preset shooting moment are saved. Please refer to a second picture 01 in Fig.1B and a first picture 02 in Fig.1C, a flower image is the foregoing preset area image, by comparing the flower image in both the pictures, it is found that the flower in the first picture 02 is increased by 12% in volume than the flower in the second picture 01, greater than the first preset threshold value (i.e., 10%), at the moment, the first picture 02 is saved.

The above camera shooting method according to the embodiments of the present disclosure may be applicable to shooting potted plants, cityscape, natural scenery, astronomical phenomena, transportation and living conditions, biological evolution, and scientific research, etc.

The above camera shooting method according to the embodiments of the present disclosure is characterized by: comparing pictures shot at a current preset shooting moment and pictures shot at a previous preset shooting moment, saving pictures shot at a current preset shooting moment if a distinction between pictures shot at a current preset shooting moment and pictures shot at a previous preset shooting moment is greater than or equal to a first preset threshold value (it is regarded that pictures shot are changed obviously), effectively avoiding missing shooting and repeatedly saving identical pictures or pictures with inconspicuous change, automatically shooting and saving suitable pictures for users for the convenience of making a dynamic image or synthesizing a video at a later stage, thus meeting user demands and saving plenty of time and effort.

In an exemplary embodiment, the method mentioned above may also comprise: discarding a first picture when the foregoing distinction is smaller than the first preset threshold value. When a distinction between pictures shot at a current preset shooting moment and pictures shot at a previous preset shooting moment is smaller than a first preset threshold value, it may be regarded that the object photographed is changed inconspicuously or is not changed at all in this time, under the circumstances, the pictures don't need saving, thus not only saving memory space, but also avoiding manually removing undesired pictures in the post-production of dynamic image or synthetic video, facilitating post-processing and saving plenty of time and effort.

In an exemplary embodiment, prior to Step S101, the method may also comprise:
setting a preset shooting moment.

Wherein, setting a preset shooting moment may be implemented as any one of four following implementations:

### Implementation I

Setting a preset shooting moment may be implemented as: receiving a shooting moment inputted, and determining the shooting moment inputted as a preset shooting moment. If users are familiar with characteristic of change of an object photographed, they may manually input shooting moments, and pictures are automatically shot at each shooting moment inputted. This implementation is suitable for shooting objects whose status is changed uniformly, for example, shooting solar eclipse or lunar eclipse.

### Implementation II

Setting a preset shooting moment may be implemented as: identifying an object photographed and acquiring an identification result, the identification result comprising category information relating to the object photographed and/or variable parameters relating to the object photographed; and determining a preset shooting moment according to the identification result. In this implementation, a database needs presetting, which comprises category information relating to multiple objects and variable parameters relating to each of the objects. The objects photographed may be identified by using image recognition technology, and at least one of category information relating to the objects photographed and/or variable parameters relating to the objects photographed are determined according to data in the database. For example, when the object photographed is a flower, flower species and even the concrete name of the flower may be identified by using the database, thus judging the flowering cycle of the flower. It is simpler and more efficient to set a preset shooting moment according to the flowering cycle of a flower, and pictures shot are more in line with user needs.

### Implementation III

Setting a preset shooting moment may be implemented as: receiving a shooting time interval inputted, and determining a preset shooting moment according to the shooting time interval. Users may manually input a shooting time interval, at which pictures are automatically shot. This implementation is simple to set, and capable of meeting user needs.

In an exemplary embodiment, each shooting time interval inputted may be either equivalent or varied according to characteristics of change of an object photographed and to a shooting progress. For example, it is possible to set each shooting time interval equal for shooting cloud change; in case of shooting egg hatch, a longer shooting time interval shall be set before egg hatch, and a shorter shooting time interval shall be set during egg hatch; in case of shooting cell division, appropriate shooting time interval shall be set according to features of cell division.

### Implementation IV

Setting a preset shooting moment may be implemented as below: acquiring at least two pictures continuously shot prior to the current moment according to a first shooting time interval, judging whether preset area images of the at least two pictures are the same; setting a second shooting time interval greater than the first shooting time interval if they are the same, and determining a preset shooting moment according to the second shooting time interval; setting a third shooting time interval smaller than the first shooting time interval if they are different and distinctions between preset area images for every two adjacent pictures in the at least two pictures are equal to or greater than a second preset threshold value, and determining the preset shooting moment according to the third shooting time interval.

Namely, when preset area images of the at least two pictures continuously shot are the same, it is regarded that the at least two pictures continuously shot are not changed and the shooting time interval is too short, thus a greater shooting time interval shall be set. Similarly, if distinctions between preset area images of every two adjacent pictures in the at least two pictures are equal to or greater than a second preset threshold value, it is regarded that the distinction between adjacent pictures is too great and the shooting time interval is too long, thus a smaller shooting time interval shall be set. Thus, it is possible to effectively avoid missing shooting pictures or repeatedly shooting identical pictures. For example, when the object photographed is a flower, and if the volume of the flower in every two adjacent pictures is increased or decreased in excess of a second preset threshold value 20% , it is regarded that change of state of the flower is too great and the time interval is set too long, thus the shooting time interval shall be appropriately shortened, and the shooting time interval shall be set at a third shooting time interval smaller than the first shooting time interval.

In an exemplary embodiment, after Step S104, i.e., after saving the first picture, the method may also stop shooting, and the method may comprise:

acquiring a first picture and at least one picture continuously shot prior to a current moment; determining a volume variation of a preset area image for every two adjacent images in the first picture and the at least one picture; and stopping shooting when the volume variation of a preset area image in every two adjacent images is zero.

Or, the method may also comprise: stopping shooting according to a stop instruction inputted.

For example, when an object photographed is a flower, images continuously shot after flower withering is the same, i.e., the volume variation of a preset area image in images is zero. Under the circumstances, for the convenience of the user, shooting may either be automatically stopped or be stopped according to a stop instruction inputted by users.

### In an exemplary embodiment, the method may also comprise:

integrating, in accordance with the shooting sequence, all the first pictures saved and forming a dynamic image. For example, it needs about 72 hours for a certain flower to bloom, shooting is conducted according to a preset shooting moment set in any one of foregoing Implementations I-IV, a first picture is saved according to the method in foregoing Steps S101-S104, and micro-variation of flowering process is recorded in sequence, for example, the quantity of all the first pictures saved is 144. All the first pictures are displayed by a projector at a frequency of 24 images per second, thus forming a dynamic image, in this way, the 72-hour flowering process is rapidly reappeared in 6 seconds.

Moreover, all the first pictures saved are synthesized to a video by means of App and software with a function of synthesizing videos, such as Photoshop and the like, thus recording the changing process of the object photographed.

In an exemplary embodiment, prior to Step S102, the foregoing method may also comprise: acquiring environmental parameters; adjusting shooting parameters according to the environmental parameters; under the circumstances, Step S102 "a picture is shot and a first picture is acquired when a current moment reaches a preset shooting moment" may be implemented as: shooting a picture and acquiring a first picture according to the shooting parameters adjusted when a current moment reaches a preset shooting moment.

Wherein, environmental parameters may be any one item or multiple items of indoor scene and outdoor scene, illumination intensity and weather parameters. Shooting parameters may be any one item or multiple items of aperture value, shutter speed, light sensitivity, exposure compensation value and white balance.

In an exemplary embodiment, the preset shooting moment may be adjusted with adjustment of shooting parameters, and the shooting parameters may be adjusted with variation of the environmental parameters. For example, when environmental parameters acquired show it is night, as shooting parameters fit for daytime is not fit for night, the shooting parameters shall be set according to the environmental parameters as: aperture value F2.8, shutter speed 2s, light sensitivity 3200, exposure compensation value +2 and white balance Auto. Once reaching a preset shooting moment, pictures are shot and saved according to shooting parameters adjusted so as to acquire clearer and preferable pictures.

The camera shooting method according to the embodiments of the present disclosure may, according to the status of change of an object photographed, automatically select to save or discard pictures so as to help users automatically select satisfactory pictures, thus avoiding manually removing undesired pictures in the post-production, meeting user demands and saving plenty of time and effort. The problem of missing shooting and poor quality of pictures may be effectively avoided by timely adjusting the preset shooting moment and shooting parameters, thus ensuring pictures selected more in line with user demands.

The foregoing technical solution according to the embodiments of the present disclosure will be illustrated by means of specific embodiments hereinafter.

### Embodiment 1:

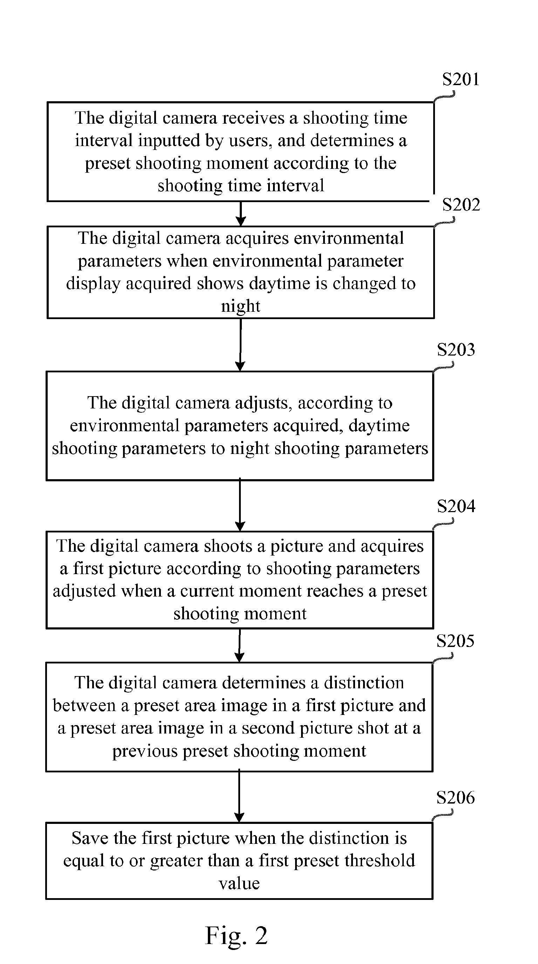

Embodiment 1 uses the camera shooting method according to the embodiments in the present disclosure, taking a digital camera as an example, wherein, the shooting time interval is set at 5 minutes; the first preset threshold value is set at 8%; in environmental parameters, indoor illumination intensity is 100-700lx at daytime, and 0.1lx at night; shooting parameters at daytime are: aperture value F8, shutter speed 1/400s, light sensitivity 800, exposure compensation value +1 and white balance sunlight; and shooting parameters at night are: aperture value F4.5, shutter speed 2s, light sensitivity 3200, exposure compensation value +2 and white balance incandescent lamp. Then, users put the digital camera on a tripod, turn on the digital camera and get ready for shooting, as shown in Fig.2, and then operate the digital camera as below:
In Step S201, the digital camera receives a shooting time interval inputted by users, and determines a preset shooting moment according to the shooting time interval.
In Step S202, the digital camera acquires environmental parameters and executes Step S203 when environmental parameter acquired shows daytime is changed to night.
In Step S203, the digital camera adjusts, according to environmental parameters acquired, daytime shooting parameters to night shooting parameters.
In Step S204, the digital camera shoots a picture and acquires a first picture according to shooting parameters adjusted when a current moment reaches a preset shooting moment.
In Step S205, the digital camera determines a distinction between a preset area image in a first picture and a preset area image in a second picture shot at a previous preset shooting moment.
In Step S206, the first picture is saved when the foregoing distinction is equal to or greater than a first preset threshold value.

The above Step S201 is corresponding to the foregoing Implementation III. Of course, the above Step S201 also may be implemented as the foregoing Implementation I, II or IV.

In embodiment 1, shooting parameters are automatically adjusted by changing environmental parameters, ensuring to shoot satisfactory pictures, dispensed with manually inputting the parameters by users, thus meeting user demands and ensuring pictures selected more in line with user demands.

### Embodiment 2:

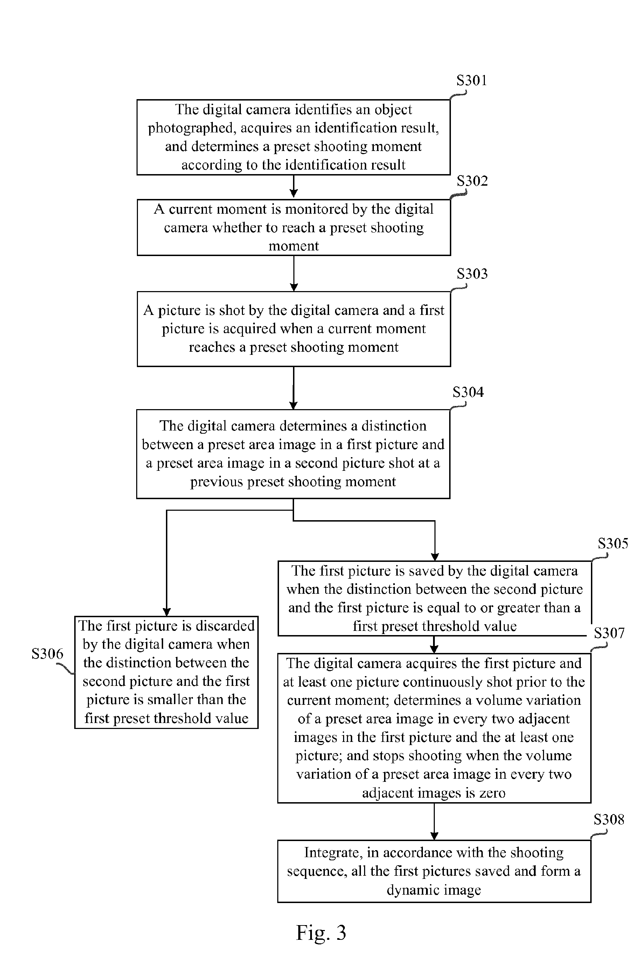

In embodiment 2, the method according to embodiments of the present disclosure is applied to a digital camera, wherein the first preset threshold value is set at 10%. In embodiment 1, a user wants to shoot the whole blooming and fading process of an epiphyllum, which usually blooms at seven or eight o'clock at night and fades at eleven or twelve o'clock, the whole process lasts only three to four hours. The user puts the digital camera on a tripod, turns on the digital camera and gets ready for shooting, as shown in Fig.3, and then operates the digital camera as below:
In Step S301, the digital camera identifies an object photographed, acquires an identification result, and determines a preset shooting moment according to the identification result. In the embodiment, the digital camera identifies the object photographed as an epiphyllum, and respectively determines time required for anthesis, florescence and fading, and change rates thereof. For example, if anthesis lasts 10 minutes and change of state of a flower is faster, the preset shooting moment at this time period is set as shooting once every two seconds; if florescence lasts 2.5 hours and change of state of the flower is not obvious, the preset shooting moment at this time period is set as shooting once every 10 minutes; and if fading lasts 0.5 hour, the preset shooting moment at this time period is set as shooting once every 2 minutes.
In Step S302, a current moment is monitored by the digital camera whether to reach the preset shooting moment.
In Step S303, a picture is shot by the digital camera and a first picture is acquired when a current moment reaches the preset shooting moment.
In Step S304, the digital camera determines a distinction between a preset area image in a first picture and a preset area image in a second picture shot at a previous preset shooting moment. In the embodiment, the distinction between a second picture and a first picture may be a difference value between a picture ratio of flower of epiphyllum in the first picture and a picture ratio of flower of epiphyllum in the second picture. In the step, the distinction between preset area images in a first picture and in a second picture may be determined by means of a difference value between a shape variation of the plant image in the first picture and a shape variation of the plant image in the second picture.
In Step S305, the first picture is saved by the digital camera when the distinction between the second picture and the first picture is equal to or greater than a first preset threshold value.
In Step S306, the first picture is discarded by the digital camera when the distinction between the second picture and the first picture is smaller than the first preset threshold value.
In Step S307, the digital camera acquires the first picture and at least one picture continuously shot prior to the current moment; determines a volume variation of a preset area image in every two adjacent images in the first picture and the at least one picture; and stops shooting when the volume variation of a preset area image in every two adjacent images is zero. In other words, a flower is regarded to have withered away in case of no change between at least two pictures continuously shot, under the circumstances, shooting is stopped. The step may also be implemented as stopping shooting according to a stop instruction inputted by users.
In Step S308, users will integrate, in accordance with the shooting sequence, all the first pictures saved and form a dynamic image.

The above Step S301 is corresponding to the foregoing Implementation II. Of course, the above Step S301 also may be implemented as the foregoing Implementation I, III or IV.

In embodiment 2, an object photographed is identified and the preset shooting moment is determined according to the identification result, which ensures the preset shooting moment set more reasonable, effectively avoiding missing shooting or repeatedly shooting pictures with inconspicuous change; the variation between the second picture and the first picture is regarded minor when a distinction between them is smaller than a first preset threshold value, under the circumstances, the first picture may be discarded, thus not only saving memory space, but also avoiding repeatedly saving pictures with inconspicuous change, and automatically stopping shooting in case of no change of the object photographed for the convenience of users.

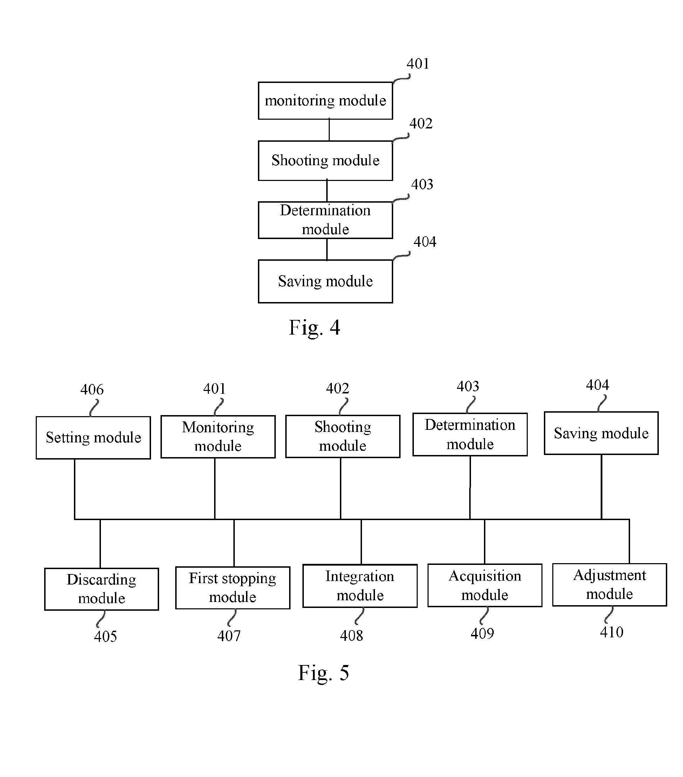

Fig. 4 is a block diagram of a camera shooting device according to an exemplary embodiment, as shown in Fig.4, the camera shooting device comprises:
a monitoring module 401, configured to monitor whether a current moment reaches a preset shooting moment;
a shooting module 402, configured to shoot a picture and acquire a first picture when the current moment reaches the preset shooting moment;
a determination module 403, configured to determine a distinction between a preset area image in the first picture and a preset area image in a second picture shot at a previous preset shooting moment; and
a saving module 404, configured to save a first picture when the distinction is equal to or greater than a first preset threshold value.

In an exemplary embodiment, as shown in Fig.5, the device also comprises:
a discarding module 405, configured to discard a first picture when the distinction is smaller than the first preset threshold value.

In an exemplary embodiment, as shown in Fig.5, the device also comprises:
a setting module 406, configured to set the preset shooting moment.

In an exemplary embodiment, the foregoing setting module may comprise:
a first setting submodule, configured to receive a shooting moment inputted, and determine the shooting moment inputted as the preset shooting moment; or
a second setting submodule, configured to: identify an object photographed and acquire an identification result, the identification result comprising category information relating to the object photographed and/or variable parameters relating to the object photographed; and determine the preset shooting moment according to the identification result; or
a third setting submodule, configured to receive a shooting time interval inputted, and determine the preset shooting moment according to the shooting time interval; or
a fourth setting submodule, configured to: acquire at least two pictures continuously shot prior to the current moment according to a first shooting time interval, judge whether preset area images in the at least two pictures are the same; set a second shooting time interval greater than the first shooting time interval if they are the same, and determine the preset shooting moment according to the second shooting time interval; set a third shooting time interval smaller than the first shooting time interval if they are different and distinctions between preset area images in every two adjacent pictures in the at least two pictures are equal to or greater than a second preset threshold value, and determine the preset shooting moment according to the third shooting time interval.

In an exemplary embodiment, the determination module may comprise:
a determination submodule, configured, when the preset area image is a plant image, to determine a distinction between a preset area image in a first picture and a preset area image in a second picture shot at a previous preset shooting moment; the distinction comprising: a difference value between a picture ratio of the plant image in the first picture and a picture ratio of the plant image in the second picture; and/or a difference value between a shape variation of the plant image in the first picture and a shape variation of the plant image in the second picture.

In an exemplary embodiment, as shown in Fig.5, the device also comprises:
a first stopping module 407, configured, after the first picture is saved by the saving module, to acquire the first picture and at least one picture continuously shot prior to the current moment; to determine a volume variation of a preset area image in every two adjacent images in the first picture and the at least one picture; and to stop shooting when the volume variation of a preset area image in every two adjacent images is zero; or
a second stopping module, configured to stop shooting according to a stop instruction inputted.

In an exemplary embodiment, as shown in Fig.5, the device also comprises:
an integration module 408, configured to integrate, in accordance with the shooting sequence, all the first pictures saved and form a dynamic image.

In an exemplary embodiment, as shown in Fig.5, the device also comprises:
an acquisition module 409, configured to acquire environmental parameters before the first picture is acquired by the shooting module; and
an adjustment module 410, configured to adjust shooting parameters according to the environmental parameters.

The foregoing shooting module may comprise:
a shooting submodule, configured to shoot a picture and acquire a first picture according to the shooting parameters adjusted when a current moment reaches a preset shooting moment.

The camera shooting device according to the embodiments of the present disclosure may, according to the status of change of an object photographed, automatically select to save or discard pictures so as to help users automatically select satisfactory pictures, thus avoiding manually removing undesired pictures in the post-production, meeting user demands and saving plenty of time and effort. The problem of missing shooting and poor quality of pictures may be effectively avoided by timely adjusting the preset shooting moment and shooting parameters, thus ensuring pictures selected more in line with user demands.

With regard to the device in the above embodiment, detailed description of specific modes for conducting operation with respect to the respective modules has been made in the embodiment related to the method, no detailed illustration will be made herein.

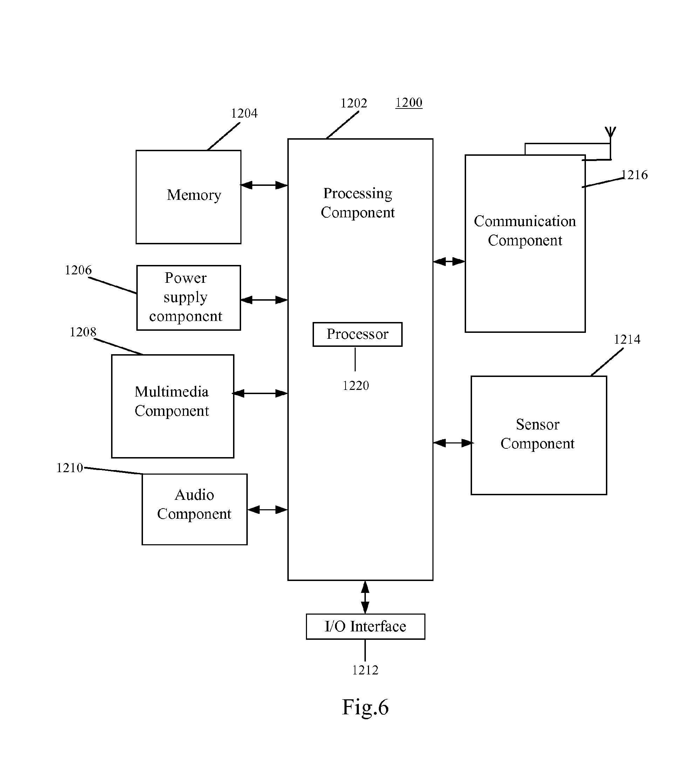

Fig. 6 is a block diagram of a camera shooting device 1200 according to an exemplary embodiment, and the device is for use in a terminal equipment. For example, the device 1200 may be a mobile telephone, a computer, a digital broadcasting terminal, a message transceiver device, a games console, a tablet device, a medical device, a fitness facility, a PDA (personal digital assistant) and the like.

Referring to Fig.6, the device 1200 may include one or a plurality of components as below: a processor component 1202, a memory 1204, a power supply component 1206, a multimedia component 1208, an audio component 1210, an input/output (I/O) interface 1212, a sensor component 1214 and a communication component 1216.

The processor component 1202 usually controls the overall operation of the device 1200, for example, display, telephone call, data communication, and operation associated with camera operation and record operation. The processor component 1202 may include one or a plurality of processors 1220 for executing instructions so as to complete steps of the above method in part or in whole. In addition, the processor component 1202 may include one or a plurality of modules for the convenience of interaction between the processor component 1202 and other components. For example, the processor component 1202 may include a multimedia module for the convenience of interaction between the multimedia component 1208 and the processor component 1202.

The memory 1204 is configured to store data of different types so as to support the operation of the device 1200. Examples of the data include any application program or approach directive for operation of the device 1200, including contact data, phonebook data, message, picture and video, etc. The memory 1204 may be realized by volatile or non-volatile memory device of any type or combination thereof, for example, static random access memory (SRAM), electrically erasable programmable read-only memory (EEPROM), erasable programmable read only memory (EPROM), programmable read-only memory (PROM), read-only memory (ROM), magnetic memory, flash memory, magnetic disk or optical disk.

The power supply component 1206 provides power for components of the device 1200. The power supply component 1206 may include a power management system, one or a plurality of power supplies, and other components associated with generation, management and power distribution of the device 1200.

The multimedia component 1208 includes a screen between the device 1200 and a user and for providing an output interface. In some embodiments, the screen may include an LCD (Liquid Crystal Display) and a touch panel (TP). If the screen includes a touch panel, the screen may be realized as a touch screen for receiving input signal from users. The touch panel includes one or a plurality of touch sensors for sensing gestures on the touch panel, for example, touching and sliding, etc. The touch sensor not only can sensor trip boundary of touching or sliding, but also can detect the duration and pressure related to the touching or sliding operation. In some embodiments, the multimedia component 1208 includes a front-facing camera and/or a rear-facing camera. When the device 1200 is under an operation mode, for example, capture mode or video mode, the front-facing camera and/or the rear-facing camera may receive external multimedia data. Each front-facing camera and rear-facing camera may be a fixed optical lens system or have focal length and optical zoom capacity.

The audio component 1210 is configured to output and/or input audio signal. For example, the audio component 1210 includes a microphone (MIC); when the device 1200 is under an operation mode such as call mode, record mode and speech recognition mode, the microphone is configured to receive external audio signal. The audio signal received may be further stored in the memory 1204 or sent out by the communication component 1216. In some embodiments, the audio component 1210 also includes a loudspeaker for outputting audio signal.

The I/O interface 1212 provides interface for the processor component 1202 and peripheral interface modules, the peripheral interface modules may be a keyboard, a click wheel and buttons, etc. These buttons may include but not limited to: home button, volume button, start button and locking button.

The sensor component 1214 includes one or a plurality of sensors for providing the device 1200 with state evaluation from all aspects. For example, the sensor component 1214 may detect the on/off state of the device 1200, relative positioning of components, for example, the components are the displayer and keypads of the device 1200; the sensor component 1214 also may detect the position change of the device 1200 or a component thereof, the presence or absence of users' touch on the device 1200, the direction or acceleration/deceleration of the device 1200, and temperature variation of the device 1200. The sensor component 1214 may also include a proximity detector, which is configured to detect the presence of nearby objects in case of no physical touch. The sensor component 1214 may also include an optical sensor, for example, CMOS or CCD image sensor for imaging. In some embodiments, the sensor component 1214 may also include an acceleration sensor, a gyro sensor, a magnetic sensor, a pressure sensor, or a temperature sensor.

The communication component 1216 is configured to facilitate wired communication or wireless communication between the device 1200 and other equipment. The device 1200 is available for access to wireless network based on communication standards, for example, WiFi, 2G or 3G, or combination thereof. In an exemplary embodiment, the communication component 1216 receives by means of a broadcast channel the broadcast signal or broadcast-related information from external broadcast management systems. In an exemplary embodiment, the communication component 1216 also includes a near field communication (NFC) module for promoting short-range communication. For example, the NFC module may be realized on the basis of Radio Frequency Identification (RFID) Technology, Infrared Data Association (IrDA) Technology, Ultra-wide Bandwidth (UWB) Technology, Bluetooth (BT) Technology and other technologies.

In exemplary embodiments, the device 1200 may be realized by one or a plurality of application specific integrated circuits (ASIC), digital signal processors (DSP), digital signal processing equipment (DSPD), programmable logic devices (PLD), field programmable gate arrays (FPGA), controllers, microcontrollers, microprocessors or other electronic components, configured to execute the above methods.

In exemplary embodiments, a non-transitory computer-readable storage medium including instructions is also provided, for example, a memory 1204 including instructions, above instructions may be executed by the processors 820 of the device 1200 so as to achieve the above methods. For example, the non-transitory computer-readable storage medium may be ROM, random access memory (RAM), CD-ROM, magnetic tape, floppy disk and optical data storage device, etc.

A camera shooting device comprises:
a processor; and
a memory configured to store instructions executable by the processor;
wherein, the processor is configured to:
monitor whether a current moment reaches a preset shooting moment;
shoot a picture and acquire a first picture when the current moment reaches the preset shooting moment;
determine a distinction between a preset area image in the first picture and a preset area image in a second picture shot at a previous preset shooting moment; and
save the first picture when the distinction is equal to or greater than a first preset threshold value.

The processor is also configured to: discard the first picture when the distinction is smaller than the first preset threshold value.

The processor is also configured to: set the preset shooting moment.

The processor is also configured to: receive a shooting moment inputted, and determine the shooting moment inputted as the preset shooting moment; or
identify an object photographed and acquire an identification result, the identification result comprises category information relating to the object photographed and/or variable parameters relating to the object photographed; and determine the preset shooting moment according to the identification result; or
receive a shooting time interval inputted, and determine the preset shooting moment according to the shooting time interval; or
acquire at least two pictures continuously shot prior to the current moment according to a first shooting time interval, judge whether preset area images of the at least two pictures are the same; set a second shooting time interval greater than the first shooting time interval if they are the same, and determine the preset shooting moment according to the second shooting time interval; set a third shooting time interval smaller than the first shooting time interval if they are different and distinctions between preset area images of every two adjacent pictures in the at least two pictures are equal to or greater than the second preset threshold value, and determine the preset shooting moment according to the third shooting time interval.

The processor is also configured to: acquire the first picture and at least one picture continuously shot prior to the current moment; determine a volume variation of a preset area image in every two adjacent images in the first picture and the at least one picture; and stop shooting when the volume variation of a preset area image in every two adjacent images is zero; or

stop shooting according to a stop instruction inputted.

The processor is also configured to: integrate, in accordance with the shooting sequence, all the first pictures saved and form a dynamic image.

The processor is also configured to: acquire environmental parameters; and
adjust shooting parameters according to the environmental parameters.

The shooting a picture and acquiring a first picture when a current moment reaches a preset shooting moment comprises:

shooting a picture and acquiring a first picture according to the shooting parameters adjusted when the current moment reaches the preset shooting moment.

A non-transitory computer-readable storage medium, wherein instructions in the storage medium are executable by the processor of the mobile terminal so that the mobile terminal may execute a method for accessing router, and the method includes:

monitoring whether a current moment reaches a preset shooting moment;
shooting a picture and acquiring a first picture when the current moment reaches the preset shooting moment;
determining a distinction between a preset area image in the first picture and a preset area image in a second picture shot at a previous preset shooting moment; and
saving the first picture when the distinction is equal to or greater than a first preset threshold value.

The method may also comprise:
discarding the first picture when the distinction is smaller than the first preset threshold value.

The method may also comprise:
setting the preset shooting moment.

The setting the preset shooting moment may comprise:
receiving a shooting moment inputted, and determining the shooting moment inputted as the preset shooting moment; or
identifying an object photographed and acquiring an identification result, the identification result comprising category information relating to the object photographed and/or variable parameters relating to the object photographed; and determining the preset shooting moment according to the identification result; or
receiving a shooting time interval inputted, and determining the preset shooting moment according to the shooting time interval; or
acquiring at least two pictures continuously shot prior to the current moment according to a first shooting time interval, judging whether preset area images of the at least two pictures are the same; setting a second shooting time interval greater than the first shooting time interval if they are the same, and determining the preset shooting moment according to the second shooting time interval; setting a third shooting time interval smaller than the first shooting time interval if they are different and distinctions between preset area images of every two adjacent pictures in the at least two pictures are equal to or greater than the second preset threshold value, and determining the preset shooting moment according to the third shooting time interval.

When the preset area image is a plant image in a preset area, the distinction comprises:
a difference value between a picture ratio of the plant image in the first picture and a picture ratio of the plant image in the second picture; and/or
a difference value between a shape variation of the plant image in the first picture and a shape variation of the plant image in the second picture.

The method may also comprise:
acquiring the first picture and at least one picture continuously shot prior to the current moment; determining a volume variation of a preset area image in every two adjacent images in the first picture and the at least one picture; and stopping shooting when the volume variation of a preset area image in every two adjacent images is zero; or
stopping shooting according to a stop instruction inputted.

The method may also comprise:
integrating, in accordance with the shooting sequence, all the first pictures saved and forming a dynamic image.

Prior to shooting a picture and acquiring a first picture when a current moment reaches a preset shooting moment, the method may also comprise:
acquiring environmental parameters; and
adjusting shooting parameters according to the environmental parameters.

The shooting a picture and acquiring a first picture when the current moment reaches the preset shooting moment comprises:

shooting a picture and acquiring a first picture according to the shooting parameters adjusted when the current moment reaches the preset shooting moment.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with a true scope and spirit of the invention being indicated by the following claims.
It will be appreciated that the present invention is not limited to the exact construction that has been described above and illustrated in the accompanying drawings.

## Claims

1. A method of operating a digital camera, **characterized in that** the method comprises:
monitoring (S101) whether a current moment reaches a preset shooting moment;
shooting a picture (S102) and acquiring a first picture when the current moment reaches the preset shooting moment;
determining (S103) a distinction between a preset area image in the first picture (01) and a preset area image in a second picture (02) shot at a previous preset shooting moment; and
saving (S104) the first picture when the distinction is equal to or greater than a first preset threshold value.

2. The method of claim 1, wherein the method further comprises:
discarding (S306) the first picture when the distinction is smaller than the first preset threshold value.

3. The method of claim 1, wherein, prior to monitoring (S101) whether a current moment reaches a preset shooting moment, the method further comprises:
setting (S301) the preset shooting moment.

4. The method of claim 3, wherein the setting (S301) the preset shooting moment comprises:
receiving a shooting moment as input by a user (S201), and determining the shooting moment inputted as the preset shooting moment; or
identifying an object photographed and acquiring an identification result (S202), the identification result comprising category information relating to the object photographed and/or variable parameters relating to the object photographed; and determining the preset shooting moment according to the identification result; or
receiving a shooting time interval as input by a user, and determining the preset shooting moment according to the shooting time interval; or
acquiring (S204) at least two pictures continuously shot according to a first shooting time interval prior to the current moment, judging (S205) whether preset area images of the at least two pictures are the same; setting a second shooting time interval greater than the first shooting time interval if the preset area images are the same, and determining the preset shooting moment according to the second shooting time interval; setting a third shooting time interval smaller than the first shooting time interval if the preset area images are different and distinctions between the preset area images of every two adjacent pictures in the at least two pictures are equal to or greater than a second preset threshold value, and determining the preset shooting moment according to the third shooting time interval.

5. The method according to claim 1, wherein:
when the preset area image is a plant image in a preset area, the distinction comprises:
a difference value between a picture ratio of the plant image in the first picture (01) and a picture ratio of the plant image in the second picture (02); and/or
a difference value between a shape variation of the plant image in the first picture and a shape variation of the plant image in the second picture.

6. The method of claim 1, wherein after saving (S104) the first picture, the method further comprises:
acquiring (S307) the first picture and at least one picture continuously shot prior to the current moment; determining a volume variation of a preset area image for every two adjacent images in the first picture and the at least one picture; and stopping shooting when the volume variation of the preset area image in the every two adjacent images is zero; or
stopping shooting according to a stop instruction input.

7. The method of claim 1 or 6, wherein the method further comprises:
integrating (S308), in accordance with a shooting sequence, all the said first pictures saved and forming a video sequence.

8. The method according to claim 1, wherein:
before the shooting a picture (S102) and acquiring a first picture when the current moment reaches the preset shooting moment, the method further comprises:
acquiring (S202) environmental parameters; and
adjusting (S203) shooting parameters according to the environmental parameters; and
the shooting a picture and acquiring a first picture when the current moment reaches the preset shooting moment comprises:
shooting a picture and acquiring (S204) a first picture according to the shooting parameters adjusted when the current moment reaches the preset shooting moment.

9. A camera device, comprising:
a time monitoring module (401), configured to monitor whether a current moment reaches a preset shooting moment;
a shooting module (402), configured to shoot a picture and acquire a first picture when the current moment reaches the preset shooting moment;
**characterized by**
a determination module (403), configured to determine a distinction between a preset area image of the first picture and a preset area image of a second picture shot at a previous preset shooting moment; and
a saving module (404), configured to save the first picture when the distinction is equal to or greater than a first preset threshold value.

10. The device of claim 9, wherein the device further comprises:
a discarding module (405), configured to discard the first picture when the distinction is smaller than a first preset threshold value.

11. The device of claim 9, wherein the device further comprises:
a setting module (406), configured to set the preset shooting moment.

12. The device of claim 11, wherein the setting module comprises:
a first setting submodule, configured to receive a shooting moment as input, and determine the shooting moment inputted as the preset shooting moment; or
a second setting submodule, configured to: identify an object photographed and acquire an identification result, the identification result comprising category information relating to the object photographed and/or variable parameters relating to the object photographed; and determine the preset shooting moment according to the identification result; or
a third setting submodule, configured to receive a shooting time interval input, and determine the preset shooting moment according to the shooting time interval; or
a fourth setting submodule, configured to: acquire at least two pictures continuously shot prior to the current moment according to a first shooting time interval, judge whether preset area images in the at least two pictures are the same; set a second shooting time interval greater than the first shooting time interval if the preset area images are the same, and determine the preset shooting moment according to the second shooting time interval; set a third shooting time interval smaller than the first shooting time interval if the preset area images are different and distinctions between the preset area images in every two adjacent pictures in the at least two pictures are equal to or greater than a second preset threshold value, and determine the preset shooting moment according to the third shooting time interval.

13. The device according to claim 9, wherein the determination module (403) comprises:
a determination submodule, configured, when the preset area image is a plant image, to determine a distinction between the preset area image in the first picture and the preset area image in the second picture shot at a previous preset shooting moment; the distinction comprising: a difference value between a picture ratio of the plant image in the first picture and a picture ratio of the plant image in the second picture; and/or a difference value between a shape variation of the plant image in the first picture and a shape variation of the plant image in the second picture.

14. The device of claim 9, wherein the device further comprises:
a first stopping module (407), configured, after the first picture is saved by the saving module, to acquire the first picture and at least one picture continuously shot prior to the current moment; to determine a volume variation of a preset area image for every two adjacent images in the first picture and the at least one picture; and to stop shooting when the volume variation of a preset area image in every two adjacent images is zero; or
a second stopping module, configured to stop shooting according to a stop instruction inputted.

15. The device of claim 9 or 14, wherein the device further comprises:
an integration module (408), configured to integrate, in accordance with a shooting sequence, all the first pictures saved and form a video sequence.

16. The device according to claim 9, wherein:
the device further comprises:
an acquisition module (409), configured to acquire environmental parameters before the first picture is acquired by the shooting module; and
an adjustment module (410), configured to adjust shooting parameters according to the environmental parameters, and wherein
the shooting module (402) comprises:
a shooting submodule, configured to shoot a picture and acquire a first picture according to the shooting parameters adjusted when the current moment reaches the preset shooting moment.

17. A computer program which when executing on a processor in a camera device, perform the method according to any one of claims 1 to 8.
